Europäisches Patentamt

European Patent Office

Office européen des brevets

Veröffentlichungsnummer: **0 283 658**
**A2**

# EUROPÄISCHE PATENTANMELDUNG

Anmeldenummer: 88100982.3

Int. Cl.4 **G02B 6/38**

Anmeldetag: **23.01.88**

Priorität: **27.03.87 DE 3710089**

Veröffentlichungstag der Anmeldung:
**28.09.88 Patentblatt 88/39**

Benannte Vertragsstaaten:
**AT CH GB LI SE**

Anmelder: **ANT Nachrichtentechnik GmbH**
**Gerberstrasse 33**
**D-7150 Backnang(DE)**

Erfinder: **Blume, Georg, Dipl.-Ing.**
**Jakob-Bleyer-Weg 9**
**D-7150 Backnang(DE)**
Erfinder: **Bohmwetsch, Dieter**
**Stresemannstrasse 8**
**D-7150 Backnang(DE)**
Erfinder: **Eckhardt, Fritz, Dipl.-Ing.**
**In den Badewiesen 7**
**D-7155 Oppenweiler(DE)**

**Vorrichtung zum Anbringen eines Spleissschutzes an Lichtwellenleitern.**

Eine einfach handhabbare Vorrichtung zum An- bringen eines Spleißschutzes an miteinander vers- pleißten Lichtwellenleitern (7, 8) besteht darin, daß eine Aufnahme (4) für zwei Plättchen (1, 2) vorhan- den ist, die so gestaltet ist, daß die darin eingelegten Plättchen (1, 2) einen Spalt zwischen sich freilassen, daß an zwei gegenüberliegenden Stirnseiten der Aufnahme (4) je eine Ablage (5, 6) derart angeordnet ist, daß die auf die beiden Ablagen (5, 6) aufgelegten Lichtwellenleiter (7, 8) mit ihrer Spleißstelle durch den Spalt zwischen den beiden Plättchen (1, 2) verlaufen und daß an jeder Längsseite der Plättchen- Aufnahme (4) ein Preßbacken (9, 10) angeordnet ist und mindestens einer der beiden Preßbacken (9, 10) derart beweglich gelagert ist, daß bei Ausübung eines Drucks auf die Ablagen (5, 6), welche senkrecht zur Ablagenebene verschiebbar angeordnet sind, sich der jeweils beweglich gelagerte Preßbacken in Richtung auf den gegenüberstehenden Preßbacken zu bewegt, wobei die beiden Plättchen (1, 2) zwischen den Preßbacken (9, 10) zusammengedrückt werden

FIG. 2

Xerox Copy Centre

## Vorrichtung zum Anbringen eines Spleißschutzes an Lichtwellenleitern

Die vorliegende Erfindung betrifft eine Vorrichtung zum Anbringen eines Spleißschutzes an miteinander verspleißten Lichtwellenleitern, wobei der Spleißschutz aus zwei die Lichtwellenleitersspleißstelle zwischen sich aufnehmenden Plättchen besteht.

Ein aus zwei Plättchen bestehender Spleißschutz ist aus der DE-A-33 13 014 und der DE-A-33 45 222 bekannt. Die Plättchen sind entweder zweiteilig ausgebildet, oder sie sind entlang einer Längsseite so miteinander verbunden, daß man sie aufeinander oder auseinander klappen kann.

Der Erfindung liegt nun die Aufgabe zugrunde, eine Vorrichtung der eingangs genannten Art anzugeben, mit der verspleißte Lichtwellenleiter mit möglichst wenigen Handgriffen mit einem Spleißschutz versehen werden können.

Diese Aufgabe wird durch die Merkmale des Patentanspruchs 1 gelöst.

Zweckmäßige Ausführungen der Erfindung gehen aus den Unteransprüchen hervor.

Anhand eines in der Zeichnung dargestellten Ausführungsbeispiels wird nachfolgend die Erfindung näher erläutert.

Figur 1 zeigt einen Spleißschutz,

Figur 2 zeigt eine Vorrichtung zum Anbringen des Spleißschutzes an einem Lichtwellenleiterspleiß und

Figur 3 zeigt einen Schnitt A-A durch die Vorrichtung.

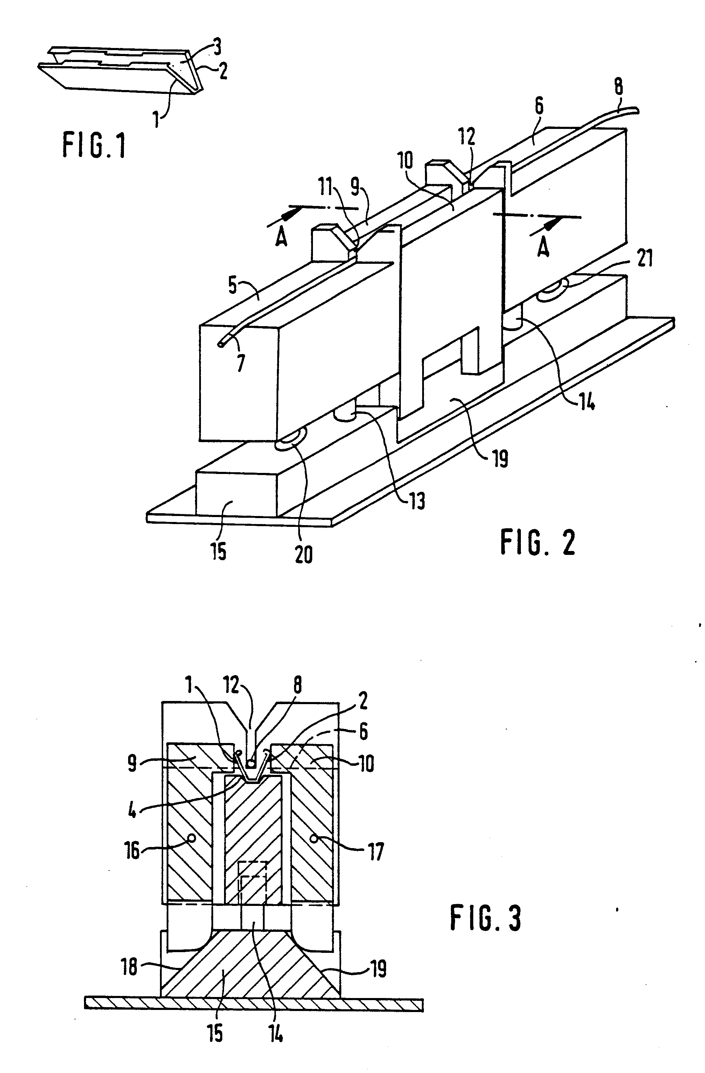

In der Fig. 1 ist ein bekannter Spleißschutz dargestellt, bestehend aus zwei Plättchen 1 und 2, die an den Innenseiten mit einem klebenden dauerplastischen Material 3 beschichtet sind. Bei dem gezeigten Ausführungsbeispiel sind die beiden Plättchen 1 und 2 an einer Längsseite miteinander verbunden und können - vergleichbar mit einem Buch - zusammengeklappt werden. Genauso sind zwei nicht miteinander verbundene Plättchen als Spleißschutz verwendbar.

Nachdem zwei Lichtwellenleiter in einem Spleißgerät miteinander verspleißt worden sind, besteht die Notwendigkeit, die Spleißstelle mit einem mechanischen Schutz zu versehen. Dazu werden die verspleißten Lichtwellenleiter zwischen zwei in der Fig. 1 dargestellten Plättchen 1 und 2 gelegt und darauf beide Plättchen zusammengedrückt.

Gegenstand dieser Anmeldung ist nun eine Vorrichtung, mit der das Zusammendrücken der Plättchen ausgeführt wird, um die Lichtwellenleiterspleißstelle zu umschließen und zu schützen. Eine solche Vorrichtung besteht, wie der Gesamtansicht in Fig. 2 und der Schnittansicht A-A in Fig.

3 zu entnehmen ist, im wesentlichen aus einer Aufnahme 4 für die Plättchen 1 und 2, zwei an den Stirnseiten der Aufnahme 4 angeordneten Ablagen 5 und 6 für die verspleißten Lichtwellenleiter 7 und 8 und zwei an den Längsseiten der Aufnahme 4 angeordneten Preßbacken 9 und 10.

Die miteinander verspleißten Lichtwellenleiter 7 und 8 werden zu beiden Seiten der Spleißstelle mit den Händen gegriffen, aus dem Spleißgerät herausgenommen und dann direkt, ohne irgendeinen Griffwechsel vorzunehmen, auf die beiden Ablagen 5 und 6 aufgelegt. Dabei sorgen an den Ablagen 5, 6 vorhandene Führungsnuten 11 und 12 dafür, daß die Lichtwellenleiter 7 und 8 mit ihrer Spleißstelle beim Auflegen auf die Ablagen zwischen die in der V-förmigen Aufnahme 4 eingelegten aufgeklappten Plättchen 1 und 2 gelangen.

Die Ablagen 5 und 6, zwischen denen sich die Aufnahme 4 für die Plättchen 1, 2 erstreckt und eine Verbindung zwischen beiden herstellt, sind senkrecht zu den Ablagenebenen verschiebbar gelagert. Zu diesem Zweck sind Führungsbolzen 13 und 14 vorgesehen, die einerseits auf einer Grundplatte 15 befestigt sind, und andererseits in Bohrungen geführt sind, die in die Ablagen 5 und 6 eingelassen sind.

Zwischen den Ablagen 5 und 6 sind zu beiden Längsseiten der Aufnahme 4 die Preßbacken 9 und 10 parallel zu der Aufnahme 4 bzw. zu den darin liegenden Plättchen 1, 2 verlaufende Achsen 16, 17 schwenkbar gelagert. Die Grundplatte 15 ist im Bereich eines jeden Preßbacken 9 bzw. 10 mit einer nach außen hin abfallenden Abschrägung 18 bzw. 19 versehen, auf der der Preßbacken 9 bzw. 10 mit einem Ende aufliegt. Wird nun mit dem Auflegen der Lichtwellenleiter 7 und 8 auf die Ablagen 5 und 6 ein Druck ausgeübt, so daß sich die Ablagen 5, 6 mit den daran schwenkbar verbundenen Preßbacken 9, 10 nach unten auf die Grundplatte 15 zu bewegen, so werden die über die Abschrägungen 18, 19 geführten Preßbacken 9, 10 zu einer Schwenkbewegung der Art veranlaßt, daß sie im Bereich der in die Aufnahme 4 eingelegten Plättchen 1, 2 aufeinander zu kippen und dabei die Plättchen 1, 2 unter Einschluß der Lichtwellenleiterspleißstelle zusammendrücken. Gibt man dann den Druck auf die Ablagen 5, 6 auf, so gleiten die Ablagen 5, 6 zusammen mit den Preßbacken 9, 10 unter Einwirkung von Druckfedern 20, 21, die zwischen den Ablagen und der Grundplatte 15 angebracht sind, in ihre Ausgangsposition zurück. Jetzt kann der mit einem Schutz versehene Lichtwellenleiterspleiß aus der Vorrichtung entnommen werden.

Anstelle von zwei schwenkbaren Preßbacken kann die Vorrichtung auch einen feststehenden und einen schwenkbaren Preßbacken aufweisen.

## Ansprüche

1. Vorrichtung zum Anbringen eines Spleißschutzes an miteinander verspleißten Lichtwellenleitern, wobei der Spleißschutz aus zwei die Lichtwellenleiterspleißstelle zwischen sich aufnehmenden Plättchen besteht, dadurch gekennzeichnet, daß eine Aufnahme (4) für die Plättchen (1, 2) vorhanden ist, die so gestaltet ist, daß die darin eingelegten Plättchen (1, 2) einen Spalt zwischen sich freilassen, daß an zwei gegenüberliegenden Stirnseiten der Aufnahme (4) je eine Ablage (5, 6) derart angeordnet ist, daß die miteinander verspleißten, auf die beiden Ablagen (5, 6) aufgelegte Lichtwellenleiter (7, 8) mit ihrer Spleißstelle durch den Spalt zwischen den beiden Plättchen (1, 2) verlaufen und daß an jeder Längsseite der Plättchen-Aufnahme (4) ein dazu parallel ausgerichteter Preßbacken angeordnet ist und mindestens einer der beiden einander gegenüberstehenden Preßbacken (9, 10) derart beweglich gelagert ist, daß bei Ausübung eines Drucks auf die Ablagen (5, 6), welche senkrecht zur Ablagenebene verschiebbar angeordnet sind, sich der jeweils beweglich gelagerte Preßbacken in Richtung auf den gegenüberstehenden Preßbacken zu bewegt, wobei die beiden Plättchen (1, 2) zwischen den Preßbacken (9, 10) zusammengedrückt werden.

2. Vorrichtung nach Anspruch 1, dadurch gekennzeichnet, daß die beiden Ablagen (5, 6) an beiden Stirnseiten der Aufnahme (4) Führungsnuten (11, 12) besitzen, welche die miteinander verspleißten Lichtwellenleiter (7, 8) beim Auflegen auf die Ablagen (5, 6) in den Spalt zwischen den Plättchen (1, 2) einführen.

3. Vorrichtung nach Anspruch 1, dadurch gekennzeichnet, daß die Ablagen (5, 6) federnd gelagert sind, so daß mit Nachlassen der Druckausübung die Ablagen (5, 6) und auch der jeweils beweglich gelagerte Preßbacken (9, 10) in ihre ursprünglichen Ausgangslagen zurückgehen und dadurch die Aufnahme (4) freigemacht wird für die Herausnahme des zwischen den beiden Plättchen (1, 2) eingeklemmten Lichtwellenleiterspleißes.

FIG.1

FIG. 2

FIG. 3